Europäisches Patentamt

European Patent Office

Office européen des brevets

(11) Publication number: **0 089 762**

**B1**

(12) **EUROPEAN PATENT SPECIFICATION**

(45) Date of publication of patent specification: **18.06.86**

(21) Application number: **83301092.9**

(22) Date of filing: **01.03.83**

(51) Int. Cl.⁴: **A 23 L 3/36, A 23 L 3/18**

(54) **Fan-plenum configuration.**

(30) Priority: **19.03.82 US 359921**

(43) Date of publication of application:
**28.09.83 Bulletin 83/39**

(45) Publication of the grant of the patent:
**18.06.86 Bulletin 86/25**

(84) Designated Contracting States:
**DE FR GB SE**

(56) References cited:
**FR-A-2 201 044**
**US-A-3 884 213**
**US-A-4 154 861**

(73) Proprietor: **Patentsmith II, Inc.**
**2051 Valley View Lane**
**Farmers Branch Texas 75234 (US)**

(72) Inventor: **Smith, Donald Paul**
**4530, Woodfin Drive**
**Dallas Texas 75220 (US)**
Inventor: **Archer, Virgil Louis**
**4036, Fountainhead Lane**
**Dallas Texas 75233 (US)**

(74) Representative: **Jones, Alan John et al**
**CARPMAELS & RANSFORD**
**43 Bloomsbury Square**
**London, WC1A 2RA (GB)**

Courier Press, Leamington Spa, England.

## Description

This invention relates to improved apparatus for rapidly and effectively transferring thermal energy either into or out of food products.

This application relates to European patent application No. 83300288.4 filed on 20th January, 1983 naming Don P. Smith as the inventor, entitled "Thermal Treatment of Food Products", which designates the same states as are designated in this application.

This application is also related to European patent application No. 83102134.0, published as EP—A—0096159, filed on 4th March, 1983 naming Michael C. Henke, Gordon P. Bell, Don P. Smith and Virgil L. Archer as the inventors and entitled "Impingement Oven".

In impingement heating and cooling devices for processing foods a jet of either heated or cooled gas impinges upon the surface of the food to sweep away the boundary layer and increase the rate of heat transfer between the gas and the food product. Cooking and cooling devices of this type have proven quite satisfactory and have been combined with other types of cooking apparatus such as microwaves to produce unique combinations of cooking devices. Exemplary prior art impingement devices are found in prior art United States Patents Nos. 3 884, 213 and 4 154,861.

In impingement devices used to process foods, the control of the flow of the gases presents problems which are not found in any other type of heating or cooling device. It is apparent that the volume and velocity of the gases contacting the food being processed determine the cooking or cooling rate. It is therefore critical to assure that the gas flow is within the specifications necessary to properly cook or cool the food to insure that the food product is either completely cooked or cooled as the case may be. In addition to the problems of controlling the rate and volume of the flow of the impinging gases in devices of this type, other unique problems are present relating to the flow of these gases which are not present in any other type of heating or cooling device. These problems relate to the distribution of the heating or cooling gas jet across the product to insure that uniform cooking or cooling occurs throughout the entire product. The critical requirement of food processing impingement devices requires that the various jets contacting a food product at a given time operate in a fixed relationship to each other even though variations in the supply flow rate occur. In addition, it has been found that the return flow path of the gases from the impingement jets affects the performance of the oven. In the past, it was believed that the most efficient configuration for removing discharged impingement gases was to draft the gases in a direction transverse to the direction of the flow of the gases in impingement jets, at least, in the area of the food product. Thus, impingement gases would flow from the nozzle and impinge upon the product and after contacting the product would move across the product in a direction transverse to the direction of flow of the impingement jets. Although this configuration performed satisfactorily it was found, contrary to what would be expected, that the efficiency and performance of the system could be improved by discharging the impingement gases in a direction reverse of the direction of the impingement jets. Thus, it was found by removing as much as possible of the transverse draft of the impingement gases and by causing a discharge in a direction opposite to the direction of the flow of the impingement jets that surprising improvement in the operating characteristics occurred. It is believed that this improved configuration reduced turbulence and increased the uniformity of heating or cooling throughout the device.

In the above mentioned European patent application No. 83300288.4, there is disclosed an impingement apparatus for thermally treating food products comprising:

a chamber for receiving a food product therein;

means for supporting and moving the food product through the chamber;

at least one jet finger means positioned above and at least one jet finger means positioned below the supporting and moving means, each jet finger means having therein a plurality of nozzles shaped and spaced to form a plurality of jets of gas for impingement on a discrete area of the food product;

plenum means in the chamber supporting the jet finger means above and below the supporting and moving means and having an inlet for receiving gas from the chamber and outlet openings for feeding gas to the jet finger means; and

impeller means positioned in the inlet of the plenum means for providing a supply of pressurised gas to said plenum means;

whereby, on operation of the impeller means and the supporting and moving means, impinging jets of gas are produced which impinge on and are moved across the surfaces of the food product for the thermal treatment thereof,

characterised in that:

the apparatus is arranged such that, after impingement on the food product, the gas streams return towards the plenum means in a direction reverse to the direction of the impinging jets between the jet fingers means.

The present invention comprises an impingement apparatus as disclosed in the above mentioned European patent application which further includes a deflector in the plenum means, the deflector being shaped and positioned relative to the impeller means to direct gas to the jet finger means.

These and other aspects of the present invention will become better understood by considering the drawings and detailed description contained in this application.

The following drawings are included to illustrate the various aspects of the present invention:

Figure 1 is a perspective view of a commercial impingement oven incorporating the present invention;

Figure 2 is a plan view partly in section of the oven illustrated in Figure 1;

Figure 3 is a section taken on line 3—3 of Figure 2 looking in the direction of the arrows;

Figure 4 is a section taken along line 4—4 looking in the direction of the arrows;

Figure 5 is a partial sectional view taken along line 5—5 of Figure 4 and looking in the direction of the arrows;

Figure 6 is a view similar to Figure 4 showing an alternate configuration of the fan-plenum arrangement;

Figure 7 is a perspective view of the fan illustrated in Figures 6 and 8;

Figure 8 is a view similar to Figure 6 showing alternate configuration of the fan-plenum arrangement;

Figure 9 is a front elevation of a cooling impingement device of the present invention;

Figure 10 is a horizontal section of the device taken on line 10—10 of Figure 9 looking in the direction of the arrows; and

Figure 11 is a vertical section of the device taken on line 11—11 of Figure 9 looking in the direction of the arrows.

The drawings and the accompanying description when considered together and read fairly provide a sufficient description for a person of ordinary skill in the art to make and use the present invention.

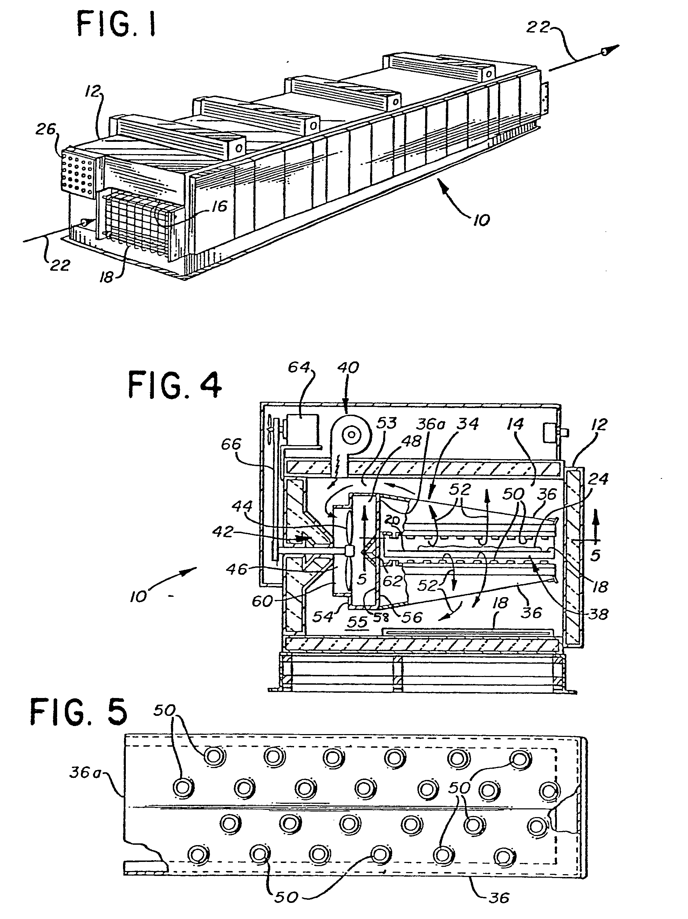

Referring now to the drawings wherein like reference characters are used throughout the various views to indicate like or corresponding parts, there is shown in Figures 1—5 an impingement apparatus for food products. For purposes of description, the apparatus is designated by reference numeral 10. The embodiment illustrated in Figures 1—5 is a commercial type and utilizes an endless conveyor to move food products therethrough. The apparatus contains a plurality of upper and lower impingement jets directed toward the top and the bottom of the food product as it moves through the oven. Preferably, the conveyor is of a chain mesh material to allow impingement jets to pass therethrough. The present invention is illustrated as a commercial oven but also has application to other types of ovens and in food cooling devices. The description of the present invention with regard to the particular type of ovens illustrated in the Figures is by way of example and is not intended by implication to limit the invention to use in this particular type of oven. It should be appreciated that the present invention, for example, has application to smaller ovens such as those used in the home wherein an endless conveyor does not extend through the oven.

In the embodiment of Figures 1—5, the apparatus 10 comprises an insulated enclosure 12. Enclosure 12 can be constructed in any suitable manner well known in the food processing industry to produce an enclosure which forms an insulated chamber. Enclosure 12 is an elognated structure with openings 16 in the ends thereof. An endless conveyor 18 extends through these openings 16. The conveyor 18 is conventionally supported and driven by a motor (not shown) such that the food supporting surface 20 of the conveyor is moved in the direction of arrow 22. In operation, food products 24 can be continuously moved through the enclosure 12 in the direction of arrow 22. As will be described in more detail, food products 24 are carried by conveyor 18 past a plurality of impingement jets to properly cook the food products. A control panel 26 is provided with control means for regulating the speed and operation of conveyor 18 and the impingement jets within enclosure 12.

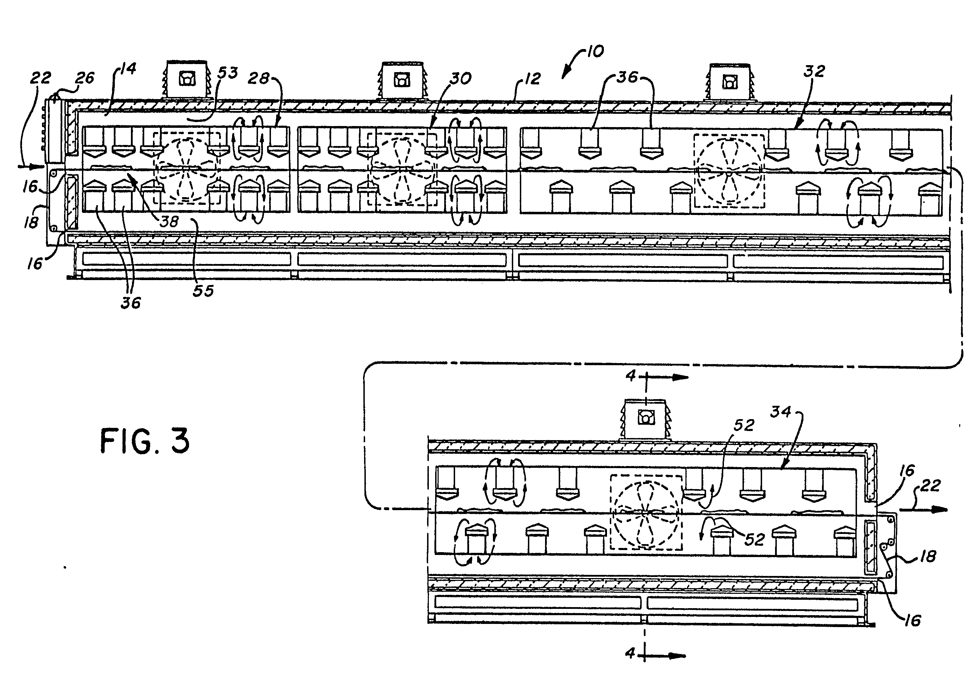

As can be seen in Figure 3, the products 24 are moved by the conveyor 18 through the enclosure 12 and pass through successive impingement apparatus assemblies 28,30,32 and 34, respectively. Each of the impingement assemblies has upper and lower impingement ducts 36. Ducts 36 are positioned in close proximity to the conveyor 18 and define a cooking area or zone 38 between the upper and lower ducts 36. By varying the location and number of these impingement ducts 36 in each of the cooking areas or zones 38 the cooking rate can be varied.

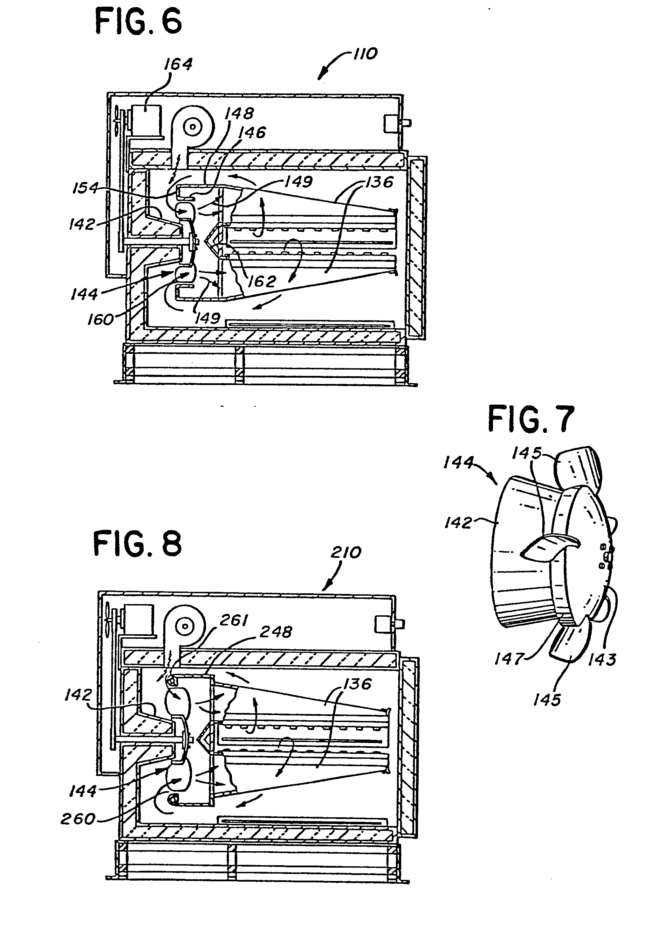

The basic construction of each of the impingement assemblies 28—34 is similar in overall construction and configuration. The impingement assemblies 28—34 differ in the position in spacing of the respective impingement ducts 36. In Figure 4, impingement assembly 34 is shown in section. It should be understood, of course, that the description of impingement assembly 34 is typical for the other impingement assemblies except as noted herein.

Impingement assembly 34 comprises the following basic elements which co-operate together to supply an even and continuous supply of heated air to the product 24 as the product is moved through the cooking area 38 by conveyor 18: a heater assembly 40, a tapering shroud 42, a driven impeller 44, a collar 46, a plenum assembly 48, and a plurality of tapered impingement ducts 36 defining a cooking area 38 therebetween. In operation, tapering shroud 42 co-operates with collar 46 to direct return air into the impeller 44. Impeller 44 in turn moves the return air into the plenum assembly 48. Plenum 48 acts as a manifold to properly distribute air into the various impingement ducts 36. Air in the impingement ducts exits through nozzles 50 and is directed against the upper and lower surfaces of the products 24.

One embodiment of an impingement duct 36 is shown in Figures 4 and 5. As is illustrated, the duct 36 is greater in cross sectional area at the end 36a adjacent to the plenum 48. The cross sectional area of the duct 36 decreases along the length of the duct as the duct extends away from the end 36a. This configuration provides an even pressure distribution of the air along the length of the duct. Duct 36 has a plurality of nozzles or perforations 50 which are arranged in the pattern illustrated in Figure 5. The gas supplied to the interior of the duct 36 exits the perforations 50 and is directed into the cooking area 38 in streams or jets as illustrated by arrows 52. These ducts 36 can be embodied as shown and described in United States Patent 4,154,861 and operate as described therein to provide a plurality of spaced discrete streams of gas or impingement jets that contact and cook the food. These jets each contact a discrete area on the food product and will not be substantially diffused prior to impingement against the surface of the food product.

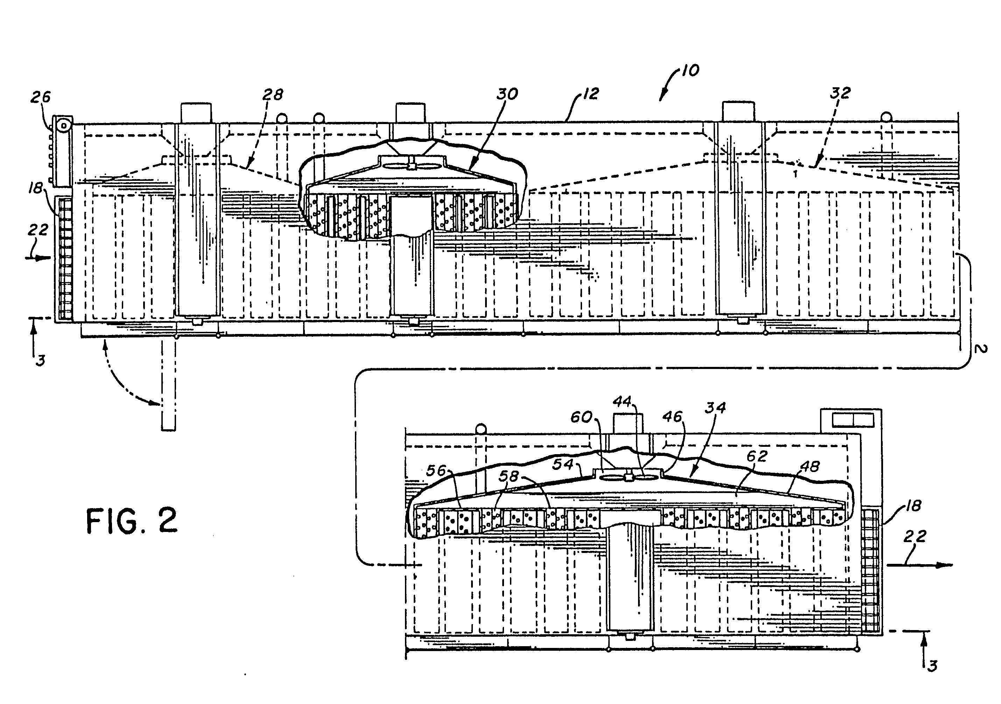

As is shown in Figure 4, impingement ducts 36 are mounted on and supported by the plenum assembly 48. Details of the configuration of the plenum assembly is shown in Figures 2, 3 and 4. The plenum assembly is constructed from a suitable sheet of material, such as stainless steel, welded, riveted or otherwise fastened together to form a plenum chamber. Plenum assembly 48 is positioned to extend above and below said conveyor 18. Plenum assembly 48 is spaced inwardly from the walls of said enclosure to provide a return flow path for air through spaces 53 and 55 located respectively above and below the plenum. Backwall 54 tapers as shown in Figure 2 to direct air outward to the impingement ducts 36 positioned across the width of the plenum. The frontwall 56 has a plurality of rectangular openings 58 through which air moves into the impingement ducts 36. In the embodiment shown in Figures 1—5, a collar 46 surrounds an opening 60 in the backwall 54 of the plenum 48. This collar is of a size to closely surround the path of impeller 44 without interfering with its movement. The collar 46 may be shaped to reduce turbulence and is small enough to co-operate with the impeller 44 to increase the efficiency and distribution of air into the plenum 48. A deflector 62 co-operates with the impeller 44 to direct air in a direction above and below the deflector 62 to improve the distribution characteristics of the plenum, reduce turbulence, and supply air to the individual impingement ducts 36 through openings 58.

As can be seen in Figure 4, tapering shroud 42 is positioned at the rear of impeller 44. This tapering shroud can be either frusto-conical or pyramid shaped to guide the return air into the collar 46. In addition, because the return air must change direction as it enters the collar 46 and impeller 44, tapering shroud 42 co-operates to eliminate dead spaces behind the impeller and forms an annular opening to direct the gas into the impeller.

Impeller 44 is shown suitably connected and driven by motor 64 through an endless belt 66. The motor 64 of course could be axial with the shaft of impeller 44. The shaft of impeller 44 extends through the center of the tapering shroud 42.

In Figure 4, heater assembly 40 is shown communicating with chamber 14. As is conventional in ovens, this heater assembly 40 is controlled by a thermostat and control circuitry not shown and operates as required to add heat to the return air before it enters the collar/impeller area of the enclosure 12. Thus the temperature of the air in the plenum can be controlled by mixing return air with heated air from the heater 40. The heater assembly 40 can be conventional gas or electric type. It should be understood that for purposes of description the improved air flow mechanism of the present invention is disclosed in regard to an oven. However, the present invention has application and utility in devices which are used to cool food products. In such instance, the heater 40 would be replaced with a suitable cooling device such as a refrigeration coil or the like to cool the air as it flows through the system. Such devices could be utilized in freezing or cooling food products. It should therefore be understood that the improved flow mechanism of the present invention would likewise have application in the freezing or cooling of foods in an apparatus of this device.

According to a particular feature of the present invention the air flow of the impingement jets and the return air is such that uniform cooking occurs of the product 24 without regard to location across the width of the conveyor 18. It is believed that this uniform cooking is a result of two primarily cooperating aspects of the apparatus of the present invention. The first aspect is a co-operation of the impeller 44, tapering shrouds 42, collar 46, deflector 62 and tapered impingement ducts. These elements of the invention co-operate to provide an even and adequate distribution of flow of return gases into the plenum assembly 48 thus insuring an adequate supply of gases to each of the impingement ducts 36 communicating with the plenum 48. An adequate and uniform distribution of return air to the various impingement ducts 36 insures a uniform and adequate supply of air for proper cooking throughout the cooking area 38. The adequate and even cooking by the impingement jets is further enhanced by the co-operation of the return path of the discharged gas. As is illustrated in Figures 3—4, the flow path of the air from the impingement jets is schematically shown by arrows 52. In Figure 4, the impingement jets are shown contacting the product 24 to sweep away the boundary layer and cause rapid heat transfer between a product 24 and the air of the impingement jet. Air from the impingement jet moves in a reverse direction after contacting product 24. The return air moves up between the impingement ducts 36 as shown in Figure 3. By moving the return air in a direction opposite to the vector of the impingement jet, side or transverse drafts are minimized and a uniform cooking occurs across the width of the conveyor 18 in the cooking area 38. It is believed that transverse or side drafts cause variations in cooking rates which can make the heat transfer rate of the particular impingement jets vary with position across the width of product 24 creating undesirable variations in cooking. By providing subject space between each of the impingement ducts 36, the return path 52 of the discharge air can move up or down, respectively, between the impingement jets and out of the cooking area. The return of these gases in this manner minimizes the affect on the uniformity of cooking.

Return air can move above and below the cooking area, over the plenum assembly 48, past the heater assembly 40 and into the impeller 44 of the tapered shroud 42. Dividing of the return gases above and below the plenum assembly 48 minimizes undesirable transverse drafts in the cooking chamber. This improvement is surprising in that one would not expect that even cooking would result from the movement of the discharged air in a direction opposite to the vector of impingement flow. It would have been assumed that moving the discharge gases in a direction opposite to the direction of the impingement flow would reduce efficiency and interfere with the flow of the impingement jets. In addition, by moving the air over both the top and bottom of the plenum provides a more even distribution of the air through the impeller 44. This increases the efficiency of the system by providing short length air return paths from the product to the impeller. Also if the conveyor surface is blocked solid, as when covered cooking pans are used, or when a solid conveyor belt is used, the air from the top and the bottom returns directly to the impeller without passing around the closed conveyor surface systems which return the gases solely to either the top or the bottom of the oven.

It is to be understood, of course, that the illustration of the invention in Figures 1—5 is by way of example and that other configurations could be utilized to practice the present invention. For example, alternate embodiments of the present invention are shown in Figures 6—11.

In Figure 6 an alternate embodiment of an impingement oven 110 is shown. This embodiment would also have the same general configuration of the oven shown in Figures 1—5 and the details of construction of the impeller assembly 144 and plenum assembly 148. In Figure 6, the backwall 154 of the plenum 148 is provided with an internally directed flange 146 which forms a collar for the impeller 144. This internally turned flange 146 extends completely around the periphery of the rear opening 160 in the plenum assembly 148. Flange 146 can be integrally formed with backwall 154 or can be formed by a separate piece fixed to the backwall 154 in a suitable manner. Flange 146 co-operates with the impeller 144 and tapering shroud 142 to improve the air flow and distribution into the plenum 148.

The impeller assembly 144 is shown in detail in perspective view in Figure 7. The tapering shroud and the impeller 44 has a central dome shaped portion with impeller blades 145 on the periphery thereof. Impeller assembly 144 is positioned with the concave side of the dome shaped portion 143 facing toward the plenum 148. The dome shaped portion co-operates with and fits around tapering shroud 142 to assist in directing the flow of air into the plenum 148. The central dome shaped portion 143 has a cylindrical skirt 147 on the periphery thereof. The skirt 147 extends parallel to the flange 146 to define an annular space therebetween. This annular space between the skirt 147 and flange 146 is the area through which the blades 145 rotate as they are driven by the motor 164. The blades 145 are each scoop shaped and provide the unique advantage of causing flow in both the axial and radial direction as shown by arrows 149. This axial and radial flow distributes the air throughout the plenum and co-operates with the shroud 142, flange 146 and a deflector 162 to provide uniform distribution of the air and uniform heat transfer rates throughout the impingement ducts 136.

In Figure 8, an oven 210 is illustrated having a plenum assembly 248 with a tapering shroud 142 and impeller assembly 144 identical to the construction illustrated in Figure 7. In the embodiment of Figure 8, the plenum 148 has a backwall 154 (not shown) with an opening 260 therein. Fixed around the periphery of the circular opening 260 is a length of tubing 261 positioned as shown in Figure 8. This tubing 261 is fixed around the edge of the opening 260 by welding, fasteners, or the like and operates to form a smooth edge around which the returning air flows. This smooth edge around the opening 260 co-operates with the fan to improve the flow of air into the plenum assembly 248.

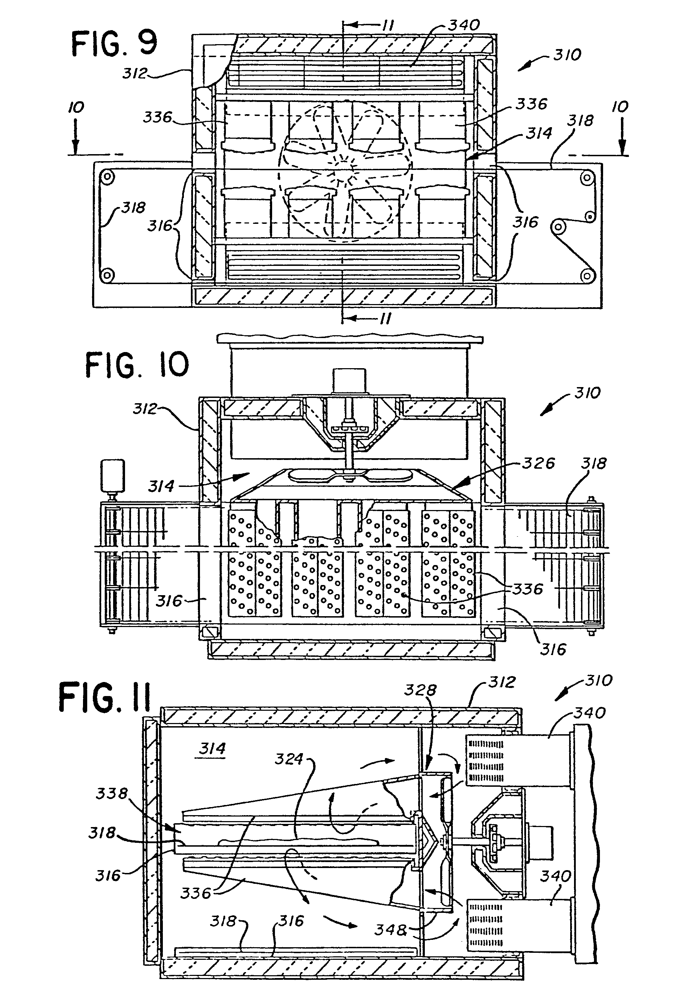

In Figures 9—11, the invention is shown in the embodiment of a cooling device. This cooling device is identified generally by reference 310 and comprises a sealed insulated enclosure 312 forming a chamber 314 therein. Openings 316 provide clearance for an endless conveyor 318 to extend through the chamber 314. The conveyor 318 is suitably driven and controlled as explained in regard to the embodiment of Figures 1—5 and is used to move food product through the chamber 314.

A single impingement assembly 328 is mounted within chamber 314. Impingement assembly 328 has a plurality of impingement ducts 336. Impingement assembly 328 and ducts 336 are similar in construction to those shown in Figures 1—5. A plurality of refrigeration coils 340 are provided within the chamber 314 in the flow path of the return to the plenum assembly 348. A conventional refrigeration assembly 341 is connected to the cooling coils 340 and is provided with suitable compressors, evaporators and the like to provide cooling for the return air passing across the coils 340. In this manner device 310 can be utilized to cool food products 324 carried by conveyor 318 as it moves through cooling area 338. It is also envisioned that additional cooling could be provided by apparatus not shown to directly inject cooling gases such as nitrogen to the rear of the plenum 348. Thus the improved flow characteristics of the oven of Figures 1—5 can be applied to a food cooling device such as shown in Figures 9—11. In the cooling device of Figures 9—11 the return air flow path can be identical to that shown and described in regard to Figures 1—5 even though the air is utilized for cooling rather than cooking.

The various aspects of the present invention have been described in regard to examplary embodiments incorporating the present invention. In addition, the invention can, for example, be applied to cooking or cooling apparatus without the presence of an endless conveyor extending through a chamber. The improved flow characteristics disclosed in the present invention could have utility and advantage in devices having a sealed enclosure wherein the food product could be moved within the enclosure on a carousel or oscillating support. It is also envisioned that the food product could be fixed and the impingement apparatus moved to cause a sweep over the surface of the product. In addition, a closed system which combines microwave or other type of food cooking or processing with the apparatus of the present invention could be used.

## Claims

1. An impingement apparatus for thermally treating food products (24) comprising:
a chamber (12) for receiving a food product (24) therein;
means (18) for supporting and moving the food product (24) through the chamber (12);
at least one jet finger means (36) positioned above and at least one jet finger means (36) positioned below the supporting and moving means (18), each jet finger means (36) having therein a plurality of nozzles (50) shaped and spaced to form a plurality of jets of gas for impingement on a discrete area of the food product (24);
plenum means (48) in the chamber (12) supporting the jet finger means (36) above and below the supporting and moving means (18) and having an inlet (60) for receiving gas from the chamber (12) and outlet openings (58) for feeding gas to the jet finger (36); and
impeller means (44) positioned in the inlet (50) of the plenum means (48) for providing a supply of pressurised gas to said plenum means (48);
whereby, on operation of the impeller means (44) and the supporting and moving means (18), impinging jets of gas are produced which impinge on and are moved across the surfaces of the food product (24) for the thermal treatment thereof,
characterised in that:
the apparatus is arranged such that, after impingement on the food product, the gas streams return towards the plenum means (48) in a direction reverse to the direction of the impinging jets between the jet finger means (36); and
the apparatus further includes a deflector (62) being shaped and positioned relative to the impeller means (44) to direct gas to the jet finger means (36).

2. The impeller apparatus of claim 1, wherein the support and moving means comprises a conveyor means (18).

3. The impingement apparatus of claim 2, wherein the conveyor means (18) is arranged in a generally horizontal passageway aligned with front and rear openings in the chamber (12).

4. The impingement apparatus of any one of claims 1 to 3, further including:

a generally annular collar (46) on the plenum means (48) disposed around the inlet opening (60); and
a shroud (42) having a surface in close proximity to the collar (46) for directing gases into the collar (46).

5. The impingement apparatus of claim 4, wherein the collar (46) has a cylindrical portion which extends axially relative to the axis of rotation of the impeller means (44).

6. The impingement apparatus of claim 5, wherein the impeller means (144) comprises a generally circular plate member which has a diameter less than the diameter of the inlet opening of the plenum, a plurality of blades (145) annularly disposed on the plate member, and means (64,66) for rotating the plate member.

7. The impingement apparatus of claim 6, wherein there is an axially extending surface (147) on the plate member.

8. The impingement apparatus of any one of claims 1 to 7, wherein each jet finger means includes a duct (36) which tapers in cross-section in a direction away from the plenum means (48).

9. The impingement apparatus of any one of claims 1 to 8, additionally comprising a heating means (40) for heating the gases to be used in the impinging jets.

10. The impingement apparatus of any one of claims 1 to 8, additionally comprising a cooling means for cooling the gases to be used in the impinging jets.

11. The impingement apparatus of claim 9, further comprising control means for regulating the temperature of the heating means.

12. The impingement apparatus of any one of claims 1 to 11, wherein the impeller means (44) comprises a fan for directing gas in a generally axial direction.

## Patentansprüche

1. Einwirkvorrichtung zur thermischen Behandlung von Lebensmitteln (24) mit
einer Kammer (12) zur Aufnahme von Lebensmitteln,
einer Einrichtung (18) zum Tragen und Bewegen der Lebensmittel (24) durch die Kammer (12),
mindestens einer oberhalb und einer unterhalb der Einrichtung (18) zum Tragen und Bewegen der Lebensmittel (24) angeordneten Düseneinrichtung (36), die jeweils mehrere so ausgebildete und beabstandete Düsen (50) umfaßt, daß mehrere Gasstrahlen zum Einwirken auf eine nicht zusammenhängende Zone des Lebensmittels (24) ausgebildet werden,
einer Unterkammer (48) in der Kammer (12), die die Düseneinrichtung (36) oberhalb und unterhalb der Einrichtung (18) zum Tragen und Bewegen trägt und einen Einlaß (60) zur Aufnahme von Gas aus der Kammer (12) und Auslaßöffnungen (58) zum Zuführen des Gases zu der Düseneinrichtung (36) aufweist, und mit
einem im Einlaß (50) der Unterkammer (48) angeordneten Gebläse (44) zur Schaffung einer Versorgung der Unterkammer (48) mit Druckgas, wodurch beim Betrieb des Gebläses (44) und der Einrichtung (18) zum Tragen und Bewegen Einwirkstrahlen erzeugt werden, die auf die Oberfläche des Lebensmittels (24) zur thermischen Behandlung desselben einwirken und quer darüber hinweg bewegt werden,

dadurch gekennzeichnet, daß

die Vorrichtung so angeordnet ist, daß die Gasströme nach dem Einwirken auf das Lebensmittel in Richtung der Unterkammern (48) umgekehrt zur Richtung der Einwirkstrahlen zwischen den Düseneinrichtungen (36) zurückkehren, und

daß die Vorrichtung weiter ein Leitblech (62) umfaßt, das relativ zum Gebläse (44) so geformt und angeordnet ist, daß es das Gas zur Düseneinrichtung (36) leitet.

2. Einwirkeinrichtung nach Anspruch 1, dadurch gekennzeichnet, daß die Einrichtung zum Tragen und Bewegen ein Fördermittel (18) umfaßt.

3. Einwirkvorrichtung nach Anspruch 2, dadurch gekennzeichnet, daß das Fördermittel (18) in einem allgemein horizontalen Durchgang, der mit vorderen und hinteren Öffnungen in der Kammer (12) ausgerichtet ist, angeordnet ist.

4. Einwirkvorrichtung nach Anspruch 1—3, weiter gekennzeichnet durch,

einen allgemein ringförmigen Kragen (46), der rings um die Einlaßöffnung (60) der Unterkammern (48) angeordnet ist, und durch

eine Abschirmung (42) mit einer Fläche, die nahe bei dem Kragen (46) liegt, um Gase in den Kragen (46) zu leiten.

5. Einwirkvorrichtung nach Anspruch 4, dadurch gekennzeichnet, daß der Kragen (46) einen zylinderischen Abschnitt aufweist, der sich axial relativ zur Rotationsachse des Gebläses (44) erstreckt.

6. Einwirkvorrichtung nach Anspruch 5, dadurch gekennzeichnet, daß das Gebläse (144) eine im allgemeinen kreisförmige Platte umfaßt, deren Durchmesser kleiner als der Durchmesser der Einlaßöffnung der Unterkammer ist, wobei mehrere Flügel (145) ringförmig an der Platte angeordnet sind und weiter eine Einrichtung (64, 66) zum Drehen der Platte vorgesehen ist.

7. Einwirkvorrichtung nach Anspruch 6, dadurch gekennzeichnet, daß die Platte eine sich axial erstreckende Fläche (147) aufweist.

8. Einwirkvorrichtung nach einem der Ansprüche 1—7, dadurch gekennzeichnet, daß die Düseneinrichtung einen Kanal (36) umfaßt, der in Richtung von der Unterkammer (48) weg einen abnehmenden geneigten Querschnitt aufweist.

9. Einwirkvorrichtung nach einem der Ansprüche 1—8, dadurch gekennzeichnet, daß eine Heizung (40) zum Erwärmen des als Einwirkstrahlen verwendeten Gases vorgesehen ist.

10. Einwirkvorrichtung nach einem der Ansprüche 1—8, dadurch gekennzeichnet, daß eine Kühlung zum Kühlen des als Einwirkstrahlen verwendeten Gases vorgesehen ist.

11. Einwirkvorrichtung nach Anspruch 9, dadurch gekennzeichnet, daß eine Regelung zur Regelung der Temperatur der Heizung vorgesehen ist.

12. Einwirkvorrichtung nach einem der Ansprüche 1—11, dadurch gekennzeichnet, daß das Gebläse (44) einen Ventilator zur Leitung des Gases in einer allgemein axialen Richtung umfaßt.

**Revendications**

1. Un dispositif d'injection pour le traitement thermique de denrées alimentaires (24) comprenant:

une chambre (12) pour contenir une denrée alimentaire (24);

des moyens (18) pour supporter et déplacer la denrée alimentaire (24) à travers la chambre (12);

au moins un moyen d'injection en forme de doigt (36) monté au-dessus et au moins un moyen d'injection en forme de doigt (36) monté au-dessous des moyens de support et de déplacement (18), chacun des moyens d'injection en forme de doigt (36) comportant à l'intérieur une pluralité de buses (50) conformées et espacées de manière à former une pluralité de jets de gaz d'injection sur une zone discrète de la denrée alimentaire (24);

des moyens de conditionnement (48) dans la chambre (12) supportant les moyens d'injection en forme de doigt (36) au-dessus et au-dessous des moyens de support et de déplacement (18) et comportant une admission (60) pour recevoir le gaz en provenance de la chambre (12) et des ouvertures de sortie (58) pour alimenter le gaz au doigt d'injection (36); et

des moyens de ventilation (44) montés dans l'admission ((50) des moyens de conditionnement (48) pour fournir une alimentation en gaz pressurisé audit moyen de conditionnement (48);

dans lequel, lors du fonctionnement des moyens de ventilation (44) et des moyens de support et de déplacement (18), des jets de projection de gaz sont produits, frappent et sont déplacés à travers les surfaces de la denrée alimentaire (24) pour le traitement thermique de celle-ci,

caractérisé en ce que:

le dispositif est aménagé de telle sorte que, après que la denrée alimentaire ait été injectée, les courants de gaz reviennent vers les moyens de conditionnement (48) dans une direction opposée à la direction des jets d'injection entre les moyens d'injection en forme de doigt (36); et

le dispositif comporte en outre un déflecteur (62) qui est conformé et monté par rapport au moyen de ventilation (44) afin de diriger le gaz vers les moyens d'injection en forme de doigt (36).

2. Le dispositif d'injection selon la revendication 1, dans lequel les moyens de support et de déplacement comprennent un moyen convoyeur (18).

3. Le dispositif d'injection selon la revendication 2, dans lequel le moyen convoyeur (18) est monté dans un passage généralement horizontal aligné avec les ouvertures avant et arrière de la chambre (12).

4. Le dispositif d'injection selon l'une quelconque des revendications 1 à 3, comportant en outre:

un collier généralement annulaire (46) sur les moyens de conditionnement (48) disposé autour de l'ouverture d'admission (60); et

un cône de protection (42) ayant une surface située très près du collier (46) pour diriger les gaz à l'intérieur du collier (46).

5. Le dispositif d'injection selon la revendication 4, dans lequel le collier (46) présente une partie cylindrique qui s'étend axialement par rapport à l'axe de rotation des moyens de ventilation (44).

6. Le dispositif d'injection selon la revendication 5, dans lequel les moyens de ventilation (144) comprennent un élément en forme de plaque généralement circulaire qui présente un diamètre inférieur au diamètre de l'ouverture d'admission du magasin, une pluralité de pales (145) disposées de façon annulaire sur l'élément en forme de plaque et des moyens (64, 66) pour entraîner en rotation l'élément en forme de plaque.

7. Le dispositif d'injection selon la revendication 6, dans lequel une surface (147) s'étend axialement sur l'élément en forme de plaque.

8. Le dispositif d'injection selon l'une quelconque des revendications 1 à 7, dans lequel chacun des moyens d'injection en forme de doigt comprend un conduit (36) dont la section transversale est en forme de cône suivant une direction s'éloignant des moyens de conditionnement (48).

9. Le dispositif d'injection selon l'une quelconque des revendications 1 à 8, comportant en outre un moyen de chauffage (40) pour chauffer les gaz utilisés dans les jets d'injection.

10. Le dispositif d'injection selon l'une quelconque des revendications 1 à 8, comportant en outre un moyen de refroidissement pour refroidir les gaz utilisés dans les jets d'injection.

11. Le dispositif d'injection selon la revendication 9, comportant en outre des moyens de commande pour régler la température des moyens de chauffage.

12. Le dispositif d'injection selon l'une quelconque des revendications 1 à 11, dans lequel les moyens de ventilation (44) comprennent un ventilateur pour diriger le gaz suivant une direction généralement axiale.

# FIG. 1

# FIG. 4

# FIG. 5

FIG. 2

FIG. 3

0 089 762

22 26 14 53 28 10 30 12 36 32

16

18

16

38

36 55

3

4

34 52

52

16 22

18

16

4

# FIG. 6

# FIG. 7

# FIG. 8

4

FIG. 9

FIG. 10

FIG. 11